# EUROPEAN PATENT APPLICATION

(11) **EP 0 835 767 A2**
(43) Date of publication of application: **15.04.1998**
(21) Application number: 97307886.8
(22) Date of filing: 07.10.1997
(51) Int. Cl.: B60C 9/20, B60C 9/00

(54) **Motorcycle radial tyre**

(30) Priority: 08.10.1996 GB 9620967
(71) Applicant: SUMITOMO RUBBER INDUSTRIES LIMITED, Kobe-shi, Hyogo-ken (JP)
(72) Inventor: Watkins, David Robert, Sutton Coldfield, West Midlands B74 3EG (GB); Nock, Nigel Gerard, Sutton Coldfield, West Midlands B76 1XR (GB)
(74) Representative: Stewart, Charles Geoffrey

(57) **Abstract**

A radial motor-cycle tyre (1) comprising a tread (2) reinforced between its edges (3,4) by a breaker assembly and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) characterised in that the breaker assembly comprises two breaker plies (5,7) comprising cords having an extensibility in the range of 0.3 to 3% under a load of 130N oppositely inclined to each other with respect to the circumferential direction of the tyre and a narrow ply (6) comprising inclined cords having an extensibility in the range of 4 to 20% under a load of 70N is disposed immediately radially outwardly of the breaker assembly wherein the narrow ply (6) has a width (S) in the range of 20% to 70% of the width TW of the tread.

## Description

This invention relates to radial motor-cycle tyres and in particular but not exclusively to high performance or race motor-cycle tyres.

Such tyres utilise very wide treads which in transverse cross-section are sharply curved to provide good contact with the road surface when the motor-cycle is steeply banked in cornering. Maintenance of a consistent ground contact area or 'tyre footprint' under all conditions is a major problem in determining general vehicle handling. Of particular importance in race motor-cycle tyres of radial construction is the provision of high cornering power with the good stability to maximise cornering speeds under race conditions.

Present radial motor-cycle race tyres have short sidewalls which extend to the tread edges radially and axially outwardly from the tyre beads. The beads provide engagement to the wheelrim on tapered bead seats. The sidewalls are reinforced by radial carcass plies which when tensioned by the inflation pressure act together with sidewall geometry to provide location of the curved tread regions to withstand cornering forces.

The sharply curved tread region of the tyre is specially reinforced by a reinforcing breaker to give the required structural rigidity to allow for banking over of the motorcycle when cornering whilst giving sufficient flexibility to allow localised tread flattening in the ground contact patch for good road grip.

Such tyres however, due to their uniform breaker structures, do not provide fully optimum stability and lateral grip. It therefore an object of the present invention is to improve the properties of such tyres.

According to one aspect of the present invention a radial motor-cycle tyre comprising a tread reinforced between its edges by a breaker assembly and having in its normally inflated fitted condition a camber value C/L of between 0.5 and 0.7, a reinforcing carcass ply of radially disposed cords extending radially inside the breaker assembly and between two bead regions and wrapped in each bead region around an annular bead core from the axial inside to the outside to form carcass ply turn-ups and between the tread edges and bead regions, tyre sidewalls characterised in that the breaker assembly comprises two breaker plies comprising cords having an extensibility in the range of 0.3 to 3% under a load of 130N oppositely inclined to each other with respect to the circumferential direction of the tyre and a narrow ply comprising inclined cords having an extensibility in the range of 4 to 20% under a load of 70N is disposed immediately radially outwardly of the breaker assembly wherein the narrow ply has a width in the range of 20% to 70% of the width TW of the tread.

By camber value is meant the ratio C/L between the radial distance C from the centre to the edge of the tyre tread and the axial distance L between the centre and edge of the tread.

Preferably the width of the narrow ply is 30% to 60% of the width of the tread, all widths being measured along the profile of the tread.

Also preferably the cords of the narrow ply are inclined at between 16 and 30 degrees, and most preferably at 25°.

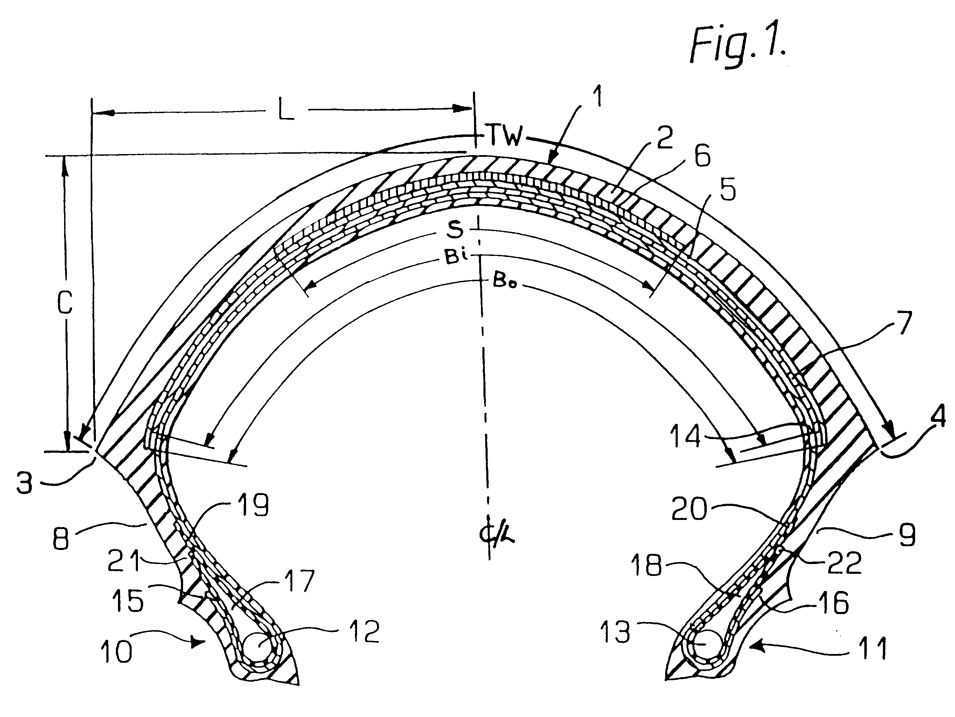

Further aspects of the present invention will become apparent from the description of the following embodiments in conjunction with the attached diagrammatic drawing in which:-
Figure 1 shows in cross-section a 170/60 R17 radial motor-cycle tyre intended for high speed racing.

The tyre 1 of Figure 1 comprises a pair of sidewalls 8 and 9 terminating in bead regions 10 and 11. Each bead region is reinforced by an inextensible annular bead core 12 and 13. Extending between each bead region is a tyre carcass reinforcement ply 14 which is anchored in each bead region by being turned around the respective bead core 12,13 laterally from the inside to the outside to form a ply turn-up 15,16. The carcass reinforcement ply 14 comprises a single ply of nylon tyre fabric laid with the cords substantially radially. Each read region 10,11 further comprises a hard rubber apex member 17,18 which is anchored to each respective bead core 12,13 and extends taperingly radially outwardly.

The tyre 1 has a camber value of 0.6 and comprises a convex tread region 2, having tread edges 3,4, reinforced by a breaker assembly. The width TW of the tread is 220mm measured along the outer surface. The breaker assembly comprises two breaker plies 6 and 7 each of which comprises Kevlar (Registered Trade Mark) aramid cord tyre fabric each of 2/167 TEX. The cords in each of the breaker plies 5 and 7 have an extensibility of 1.6% at 130N load are oppositely inclined to each other at an angle in the range 16° to 30°, preferably 25°, to the circumferential direction of the tyre. The radially inner breaker ply 7 has a width Bi of 206mm and is narrower than the radially outer breaker ply 5 which has a width Bo of 210mm. Materials having extensibilities in the range of 0.3% to 3% under a test load of 130N are suitable for the cords of the breaker plies.

Radially outside and immediately adjacent to the main breaker plies in the central region of the tread is a narrow ply 6 reinforced by nylon cords of 2/94 TEX having an extensibility of 15% at a load of 70N. This narrow ply 6 is disposed centrally about the axial centreline CL of the tyre and has the cords disposed at an angle of 16° to 30°, preferably 25°, to the tyre circumferential direction. Cords having an extensibility of between 4 and 20% under a test load of 70N are suitable for the narrow ply 6.

The narrow ply 6 has a width S of 130mm which is 59% of the tread width TW. If the narrow ply width is less than 20% of the tread width then the hoop strength in the central area is insufficient to give good stability. More preferably the width of the narrow ply is not less than 30% of the tread width.

The narrow ply may be formed in a single layer of tyre fabric or multiple layers with overlapping ends.

The resultant tyres have been found to have improved stability under all conditions, particularly on braking and off braking, and improved grip particularly lateral grip when the tyre is running maximum under camber. This construction has also been shown to give superior fatigue life.

## Claims

1. A radial motor-cycle tyre (1) comprising a tread (2) reinforced between its edges (3,4) by a breaker assembly and having in its normally inflated fitted condition a camber value C/L of between 0.5 and 0.7, a reinforcing carcass ply (14) of radially disposed cords extending radially inside the breaker assembly and between two bead regions (10,11) and wrapped in each bead region around an annular bead core (12,13) from the axial inside to the outside to form carcass ply turn-ups (15,16) and between the tread edges (3,4) and bead regions (10,11), tyre sidewalls (8,9) characterised in that the breaker assembly comprises two breaker plies (5,7) comprising cords having an extensibility in the range of 0.3 to 3% under a load of 130N oppositely inclined to each other with respect to the circumferential direction of the tyre and a narrow ply (6) comprising inclined cords having an extensibility in the range of 4 to 20% under a load of 70N is disposed immediately radially outwardly of the breaker assembly wherein the narrow ply (6) has a width (S) in the range of 20% to 70% of the width TW of the tread.

2. A motorcycle tyre according to claim 1, characterised in that the width (S) of the narrow ply (6) is in the range of 30% to 60% of the width TW of the tread.

3. A motorcycle tyre according to either of claims 1 or 2, characterised in that the cords of the narrow ply (6) are inclined at an angle of 16° to 30° to the tyre circumferential direction

4. A motorcycle tyre according to claim 3, characterised in that the cords of the narrow ply (6) are inclined at 25° to the tyre circumferential direction.

5. A motorcycle tyre according to any of claims 1 to 4, characterised in that the cords of the breaker assembly are inclined at 16° to 30° to the tyre circumferential direction.

6. A motorcycle tyre according to claim 5, characterised in that the cords of the breaker assembly are inclined at 25° to the tyre circumferential direction.

7. A motorcycle tyre according to any of claims 1 to 6, characterised in that the cords of the breaker assembly comprise aramid cords.

8. A motorcycle tyre according to any of claims 1 to 7, characterised in that the cords of the narrow ply (6) comprise nylon cords.

9. A motorcycle tyre according to any of claims 1 to 8, characterised in that the cords of the narrow ply (6) are oppositely inclined to the cords of the adjacent ply (5) of the breaker assembly.
